# EUROPÄISCHE PATENTSCHRIFT

(11) **EP 3 928 129 B1**
(45) Veröffentlichungstag und Bekanntmachung des Hinweises auf die Patenterteilung: **27.04.2022**
(21) Anmeldenummer: 20706467.6
(22) Anmeldetag: 20.02.2020
(51) Int. Cl.: G01V 1/18, B06B 1/06

(54) **VERFAHREN ZUR TESTUNG EINER KUGELHALBSCHALE FÜR DIE HERSTELLUNG EINES PIEZOKERAMISCHEN HYDROPHONS**
METHOD FOR TESTING A HEMISPHERICAL SHELL FOR THE PRODUCTION OF A PIEZOCERAMIC HYDROPHONE
PROCÉDÉ D'ESSAI D'UNE DEMI-COQUE SPHÉRIQUE POUR LA FABRICATION D'UN HYDROPHONE PIÉZOCÉRAMIQUE

(30) Priorität: 06.03.2019 DE 102019202995
(43) Veröffentlichungstag der Anmeldung: 29.12.2021
(73) Patentinhaber: ATLAS ELEKTRONIK GmbH, 28309 Bremen (DE); thyssenkrupp AG, 45143 Essen (DE)
(72) Erfinder: VAN HEIJST, Jeroen, 26129 Oldenburg (DE)
(74) Vertreter: thyssenkrupp Intellectual Property GmbH
(86) Internationale Anmeldenummer: PCT/EP2020/054455
(87) Internationale Veröffentlichungsnummer: WO 2020/178034

(56) Entgegenhaltungen:
- US-A1- 2002 059 708
- US-B1- 6 215 231
- FIELDING J T ET AL: "CHARACTERIZATION OF PZT HOLLOW-SPHERE TRANSDUCERS", PROCEEDINGS OF THE NINTH IEEE INTERNATIONAL SYMPOSIUM ON APPLICATIONS OF FERROELECTRICS (ISAF). UNIVERSITY PARK, PENNSYLVANIA, AUG. 7 - 10. 1994; [PROCEEDINGS OF THE IEEE INTERNATIONAL SYMPOSIUM ON APPLICATIONS OF FERROELECTRICS (ISAF)], NEW YORK, IE, Bd. SYMP. 9, 7. August 1994 (1994-08-07), Seiten 202-205, XP000553126, ISBN: 978-0-7803-1858-8

## Beschreibung

Die Erfindung betrifft ein Verfahren zur Testung einer Kugelhalbschale für die Herstellung eines piezokeramischen Hydrophons, ein Verfahren zur Chargentestung von piezokeramischen Hydrophonen, ein Verfahren zur kombinierten Testung und Herstellung eines piezokeramischen Hydrophons und ein piezokeramisches Hydrophon erhältlich nach dem erfindungsgemäßen Verfahren.

Unterwasserortungssysteme wie SONAR (sound navigation and ranging) Systeme werden seit über hundert Jahren vor allem in militärischen Anwendungen eingesetzt. Hierbei ist im Wesentlichen zwischen aktiven und passiven (Sonar-) Ortungssystemen zu unterscheiden. Während aktive Systeme, beispielsweise das während des zweiten Weltkrieges entwickelte ASDIC System (Anti Submarine Detection Investigation Committee), Schallwellen aussenden und empfangen, werden in passiven Systemen nur die von der Umgebung emittierten Signale empfangen und anschließend ausgewertet. Der Vorteil passiver Systeme liegt darin, dass diese keine selbst lokalisierbaren Signale aussenden. Allerdings gestaltet sich die präzise räumliche Ortung von Unterwasserobjekten alleine über passive Systeme schwieriger. Bei vielen Über- und Unterwasserfahrzeugen kommen daher in der Regel und in Abhängigkeit vom Aufgabenprofil sowohl passive als auch aktive Sonarsysteme zum Einsatz.

In bekannten Hydrophonen sind zwei Hohlkugelhälften zu einer Hohlkugel verbunden. Die DE 102 12 291 C1 und US 6,029,113 A offenbaren aus einem piezokeramischen Material bestehende Hohlkugelhälften. Die Hohlkugelhälften sind entgegengesetzt polarisiert und von jeder Hohlkugel ist eine innere und äußere Elektrode über einen Widerstand an einen invertierten Spannungsverstärker angeschlossen. Einen beispielhaften Aufbau eines Hydrophons findet sich auch in der DE 10 2008 029 269 A1, [0002], [0007]-[0008] und [0018]-[0024].

Die eigentliche Hohlkugel wird noch häufig mit einer Polymerummantelung gegenüber äußeren Einflüssen wie Feuchtigkeit und Schmutz abgeschirmt. Diese Polymerummantelung muss im Hinblick auf Schallgeschwindigkeit und die Langzeitstabilität des Materials auf den Einsatz in Verbindung mit einem Hydrophon abgestimmt sein.

Die Qualität der Außenschicht, welche in der Regel Silber und gegebenenfalls (glasartige) Siliziumverbindungen umfasst, ist von entscheidender Bedeutung für die Funktionsweise und Qualität des Hydrophons. Eine unvollständige oder defekte Oberfläche der Außenschicht schränkt die Funktion und Effektivität des Hydrophons jedoch deutlich ein. Gleichzeitig sind Fehlstellen auf der silbrig/grauen Oberfläche nur schwer bis gar nicht zu erkennen.

US 6,029,113 A offenbart den Aufbau eines differentialen Hydrophons umfassend eine keramische Kugel aus zwei piezoelektrischen Halbkugeln. Die Anordnung ermöglicht die Registrierung akustischer Signale, welche durch Änderungen des Wasserdruckes hervorgerufen werden, und deren Umwandlung in elektrische Signale.

DE 102 12 291 C1 offenbart eine Unterwasserantenne mit mindestens einem Hydrophon und einer dem Hydrophon zugeordneten, symmetrischen, elektrischen Verstärkungsschaltung.

DE 10 2008 029 269 A1 offenbart ein Hydrophon für eine Unterwasserantenne, welches zwei zu einer Hohlkugel zusammengesetzte Kugelhalbschalen aus radial polarisierten, piezoelektrischen Material und die inneren und äußeren Schalenflächen bedeckende Elektroden aufweist. Die Kugelhalbschalen sind mit ihren Schalenrändern spiegelsymmetrisch an der Unter- und Oberseite einer Trägerseite befestigt.

US 2002059708 offenbart einen Wandler in der Form einer Hohlkugel aus gesintertem keramischen Material. Die äußere Oberfläche der Hohlkugel wird mit einer Außenelektrode beschichtet, welche bevorzugt aus Metall besteht.

Die vorliegende Erfindung hat die Aufgabe, ein Verfahren zur Testung einer Kugelhalbschale für die Herstellung eines Piezokeramischen Hydrophons bereitzustellen, welches die Beurteilung der Qualität und Vollständigkeit der Außenschicht auf der Kugelhalbschale ermöglicht.

Die Aufgabe der Erfindung wird überraschenderweise durch ein Verfahren zur Testung einer Kugelhalbschale für die Herstellung eines Piezokeramischen Hydrophons gemäß Anspruch 1 gelöst. Weitere vorteilhafte Ausgestaltungen finden sich in den abhängigen Ansprüchen.

Weiterhin wird vorteilhaft ein Verfahren zur Chargentestung von Piezokeramischen Hydrophonen offenbart.

Weitere vorteilhafte Ausgestaltungen finden sich in den abhängigen Ansprüchen.

Eine weitere vorteilhafte Ausgestaltung ist ein Verfahren zur kombinierten Testung und Herstellung eines Piezokeramischen Hydrophons. Weitere vorteilhafte Ausgestaltungen finden sich in den abhängigen Ansprüchen.

Weiterhin umfasst die Erfindung ein Piezokeramisches Hydrophon erhältlich nach dem erfindungsgemäßen Verfahren.

Das erfindungsgemäße Verfahren nach Anspruch 1 zur Testung einer Hohlkugel für die Herstellung eines Piezokeramischen Hydrophons umfasst mindestens die folgenden Schritte. In einem Basisschritt erfolgt die Bestimmung von einen Schwellenwert sw.1 aus einer vorab bestimmten maximale Anzahl von nicht schwarzgefärbten Fehlstellen und/oder einen Schwellenwert sw.2 einer Größe von nicht schwarzgefärbte Fehlstellen und/oder einen Schwellenwert sw.3 der Position von nicht schwarzgefärbte Fehlstellen. Im Sinne der Erfindung kann/können sowohl einer, zwei oder drei der Schwellenwerte sw.1, sw.2 und/oder sw.3 bestimmt werden. Der Ausdruck "Größe von nicht schwarzgefärbten Fehlstellen" umfasst bevorzugt im Sinne der Erfindung eine gemittelte, mittlere Größe, ausgedrückt als Fläche oder maximaler Durchmesser. Alternativ können mehrere Schwellenwerte sw.2 für jeweils alle im Schwellenwert sw.1 gezählten nicht schwarzgefärbten Fehlstellen umfasst sein. Bei der im weiteren Verfahren angewendeten Plasmabehandlung färbt sich eine silberhaltige Außenschicht schwarz. An Stellen in denen die Außenschicht nicht genug oder kein Silber enthält erfolgt keine oder nur geringe Schwarzfärbung. Dasselbe gilt für verschmutzte oder beschädigte Stellen der Außenschicht. Die Schwarzfärbung durch die Plasmabehandlung zeigt schwarzes oxidiertes Silber und damit eine homogene Oberfläche an. Fehlstellen bleiben bevorzugt in der ursprünglich silber-grauen Farbe und werden im Rahmen der Erfinder als nicht schwarzgefärbte Fehlstellen bezeichnet.

Die Auswahl der Schwellenwerte sw.1 und/oder sw.2 und/oder sw.3 erfolgt anhand von vorab definierten Zahlenwerten oder Bereichen auf der Außenschicht der Hohlkugel. Dabei ist auch beispielsweise ein Schwellenwert sw.1 gleich Null denkbar, d.h. es dürfen keine sichtbaren Fehlstellen erkennbar sein. Bevorzugt sind im Sinne der Erfindung nicht schwarzgefärbte Fehlstellen umfasst, die mit dem durchschnittlichen menschlichen Auge sichtbar sind. Im Rahmen der Erfindung sind aber auch optische Messmethoden, beispielsweise über Kameras und Sensoren im Bereich des sichtbaren, UV und Infraroten Lichtes sowie Laser mit umfasst. Alternativ kann die Anzahl, Größe und oder Position (sw.1, sw.2, sw.3) auch über elektromagnetische Methoden, beispielsweise über Oberflächenleitfähigkeiten bestimmt werden. Die Schwellenwerte zur Bestimmung der Anzahl der Fehlstellen, d.h. ab wann eine Stelle auf der plasmabehandelten Außenschicht als Fehlstelle gezählt wird, kann dabei in Abhängigkeit von den Anforderungen an das Hydrophon und anhand der Messgenauigkeit individuell bestimmt werden.

In einem ersten Verfahrensschritt wird eine Außenschicht umfassend Silber und optional Siliziumverbindungen auf einer ersten Kugelhalbschale aufgetragen und auf einer zweiten Kugelhalbschale aufgetragen. Der Ausdruck "Außenschicht" umfasst bevorzugt im Sinne der Erfindung eine zu mindestens teilweise Beschichtung der Kugelhalbschalenflächen. Der Ausdruck "teilweise" umfasst im Sinne der Erfindung eine Beschichtung bevorzugt von mindestens 30 %, besonders bevorzugt mindestens 75 % der Kugelhalbschalen(-ober-)flächen. Zur Vermeidung eines Kurzschlusses können einzelne Abschnitte Kugelhalbschalenflächen der ersten Kugelhalbschale und der zweiten Kugelhalbschale ohne Außenschicht (Beschichtung) ausgeführt sein oder mit einer dazwischen angeordneten Isolierschicht oder einem isolierenden Element ausgeführt sein. Dies umfasst beispielsweise bevorzugt die Verbindungsfläche der beiden Kugelhalbschalen zueinander. Der Ausdruck "Außenschicht" umfasst im Sinne der Erfindung bevorzugt eine Beschichtung auf der Oberfläche der Kugelhalbschale, besonders bevorzugt die inneren und äußeren Schalenoberflächen der jeweiligen Kugelhalbschale. Die Außenschicht weist Silber und/oder Siliziumverbindungen auf, bzw. gleichbedeutend mit "enthält" Silber und/oder Siliziumverbindungen. Das Auftragen kann beispielsweise über ein Auftragen mittels Pinsel, Sprühverfahren, Tauchverfahren oder auch über PVD (physical-vapor-deposition) oder CVD (chemical-vapor-depostion) erfolgen.

In einem folgenden Schritt wird die Außenschicht gesintert und/oder kalziniert und eine erste beschichtete Kugelhalbschale und eine zweite beschichtete Kugelhalbschale erhalten.

Anschließend wird die ersten beschichtete Kugelhalbschale mit der zweiten beschichteten Kugelhalbschale zu einer Hohlkugel zusammengefügt.

In einem nächsten Schritt erfolgen die Plasmabehandlung der Außenschicht und das erhalten einer plasmabehandelten Hohlkugel mit einer schwarzgefärbten Außenschicht. Die Plasmabehandlung kann in der dem Fachmann bekannten Art und Weise, beispielsweise in einem sauerstoffhaltigen Plasma erfolgen. Die Parameter sind in der bekannten Weise so zu wählen, dass eine Oxidation und Schwarzfärbung der silberhaltigen Außenschicht erfolgt.

In einem weiteren Schritt erfolgen die Prüfung der schwarzgefärbten Außenschicht auf eine Anzahl von nicht schwarzgefärbten Fehlstellen und Erhalt eines ersten Wertes w.1; und/oder eine Größe von nicht schwarzgefärbte Fehlstellen und Erhalt eines zweiten Wertes w.2; und/oder eine Position von nicht schwarzgefärbte Fehlstellen und Erhalt eines dritten Wertes w.3. Nachfolgend werden die Werte w.1 mit sw.1 und/oder w.2 mit sw.2 und/oder w.3 mit sw.3 verglichen. Anschließend wird die plasmabehandelte Hohlkugel entfernt bzw. aussortiert falls w.1 größer sw.1 und/oder w.2 größer sw.2 und/oder w.3 größer sw.3 ist. Trifft keine der genannten Bedingungen zu, so weist die Außenschicht eine ausreichende Homogenität auf, und kann beispielsweise nach einer anschließenden Reduktion wieder in einem Hydrophon verbaut werden. Alternativ kann das erfindungsgemäße Verfahren zur Chargentestung von Kugelhalbschalen verwendet werden.

In einer bevorzugten Ausführungsform erfolgt die Plasmabehandlung bei einem Sauerstoffanteil von 80 vol. % bis 100 vol. %. Der genannte Sauerstoffanteil ermöglicht eine ausreichende Oxidation und Schwarzfärbung der Oberfläche der silberhaltigen Außenschicht.

Bevorzugt erfolgt die Plasmabehandlung bei einem Inertgas Anteil von 1 bis 20 vol. %. Besonders bevorzugt enthält das der Inertgas Anteil die Elemente oder Verbindungen N₂, Xe, He, Ar, CO₂ und/oder Gemische davon.

In einer weiteren bevorzugten Ausführungsform erfolgt die Prüfung der schwarzgefärbten Außenschicht auf eine Anzahl von nicht schwarzgefärbten Fehlstellen über einen Grenzmusterkatalog. In diesem sind bevorzugt die Werte sw.1, sw.2 und/oder sw.3 und/oder ggf. weitere Schwellenwerte aufgelistet.

Bevorzugt wird die Hohlkugel vor der Plasmabehandlung der Außenschicht mechanisch und/oder nasschemisch gereinigt. Mechanische Reinigungsverfahren umfassen Sand/Partikel Strahlverfahren und Bürsten. Im Rahmen der nasschemischen Reinigung können beispielsweise handelsübliche Reinigungsgemische auf Kohlenwasserstoffbasis zum Einsatz kommen. Besonders bevorzugt erfolgt die mechanische Reinigung mit Korundstrahlen.

Weiterhin wird vorteilhaft ein Verfahren zur Chargentestung von Piezokeramischen Hydrophonen mindestens umfassend die folgenden Schritte offenbart. Es gelten dabei die voranstehenden Erläuterungen zu den Schwellenwerten und Fehlstellen. In einem Basisschritt erfolgt die Bestimmung von einen Schwellenwert sw.1 aus einer vorab bestimmten maximale Anzahl von nicht schwarzgefärbten Fehlstellen und/oder einen Schwellenwert sw.2 einer Größe von nicht schwarzgefärbte Fehlstellen und/oder einen Schwellenwert sw.3 der Position von nicht schwarzgefärbte Fehlstellen. Im Sinne der Erfindung kann/können sowohl einer, zwei oder drei der Schwellenwerte sw.1, sw.2 und/oder sw.3 bestimmt werden. Der Ausdruck "Größe von nicht schwarzgefärbten Fehlstellen" umfasst bevorzugt im Sinne der Erfindung eine gemittelte, mittlere Größe, ausgedrückt als Fläche oder maximaler Durchmesser. Alternativ können mehrere Schwellenwerte sw.2 für jeweils alle im Schwellenwert sw.1 gezählten nicht schwarzgefärbten Fehlstellen umfasst sein. Bei der im weiteren Verfahren angewendeten Plasmabehandlung färbt sich eine silberhaltige Außenschicht schwarz. An Stellen in denen die Außenschicht nicht genug oder kein Silber enthält erfolgt keine oder nur geringe Schwarzfärbung. Dasselbe gilt für verschmutzte oder beschädigte Stellen der Außenschicht. Die Schwarzfärbung durch die Plasmabehandlung zeigt schwarzes oxidiertes Silber und damit eine homogene Oberfläche an. Fehlstellen bleiben bevorzugt in der ursprünglich silber-grauen Farbe und werden im Rahmen der Erfinder als nicht schwarzgefärbte Fehlstellen bezeichnet.

Die Auswahl der Schwellenwerte sw.1 und/oder sw.2 und/oder sw.3 erfolgt anhand von vorab definierten Zahlenwerten oder Bereichen auf der Außenschicht der Hohlkugel. Dabei ist auch beispielsweise ein Schwellenwert sw.1 gleich Null denkbar, d.h. es dürfen keine sichtbaren Fehlstellen erkennbar sein. Bevorzugt sind im Sinne der Erfindung nicht schwarzgefärbte Fehlstellen umfasst, die mit dem durchschnittlichen menschlichen Auge sichtbar sind. Im Rahmen der Erfindung sind aber auch optische Messmethoden, beispielsweise über Kameras und Sensoren im Bereich des sichtbaren, UV und Infraroten Lichtes sowie Laser mit umfasst. Alternativ kann die Anzahl, Größe und oder Position (sw.1, sw.2, sw.3) auch über elektromagnetische Methoden, beispielsweise über Oberflächenleitfähigkeiten bestimmt werden. Die Schwellenwerte zur Bestimmung der Anzahl der Fehlstellen, d.h. ab wann eine Stelle auf der plasmabehandelten Außenschicht als Fehlstelle gezählt wird, kann dabei in Abhängigkeit von den Anforderungen an das Hydrophon und anhand der Messgenauigkeit individuell bestimmt werden.

In einem ersten Verfahrensschritt wird eine Außenschicht umfassend Silber und optional Siliziumverbindungen auf einer ersten Kugelhalbschale aufgetragen und auf einer zweiten Kugelhalbschale aufgetragen. Der Ausdruck "Außenschicht" umfasst bevorzugt im Sinne der Erfindung eine zu mindestens teilweise Beschichtung der Kugelhalbschalenflächen. Der Ausdruck "teilweise" umfasst im Sinne der Erfindung eine Beschichtung bevorzugt von mindestens 30 %, besonders bevorzugt mindestens 75 % der nach Kugelhalbschalen(-ober-)flächen. Zur Vermeidung eines Kurzschlusses können einzelne Abschnitte Kugelhalbschalenflächen der ersten Kugelhalbschale und der zweiten Kugelhalbschale ohne Außenschicht (Beschichtung) ausgeführt sein oder mit einer dazwischen angeordneten Isolierschicht oder einem isolierenden Element ausgeführt sein. Dies umfasst beispielsweise bevorzugt die Verbindungsfläche der beiden Kugelhalbschalen zueinander. Der Ausdruck "Außenschicht" umfasst im Sinne der Erfindung bevorzugt eine Beschichtung auf der Oberfläche der Kugelhalbschale, besonders bevorzugt die inneren und äußeren Schalenoberflächen der jeweiligen Kugelhalbschale. Die Außenschicht weist Silber und/oder Siliziumverbindungen auf, bzw. gleichbedeutend mit "enthält" Silber und/oder Siliziumverbindungen. Das Auftragen kann beispielsweise über ein Auftragen mittels Pinsel, Sprühverfahren, Tauchverfahren oder auch über PVD (physical-vapor-deposition) oder CVD (chemical-vapor-depostion) erfolgen.

In einem folgenden Schritt wird die Außenschicht gesintert und/oder kalziniert und eine erste beschichtete Kugelhalbschale und eine zweite beschichtete Kugelhalbschale erhalten.

Anschließend wird die erste beschichtete Kugelhalbschale mit der zweiten beschichteten Kugelhalbschale zu einer ersten Hohlkugel zusammengefügt.

Die voranstehend beschriebenen Schritte werden wiederholt und eine zweite oder bevorzugt mehrere weitere Hohlkugeln zu erhalten.

In einem nächsten Schritt erfolgt die Plasmabehandlung der Außenschicht der ersten Hohlkugel und eine plasmabehandelte erste Hohlkugel mit einer schwarzgefärbten Außenschicht wird erhalten. Die Plasmabehandlung kann in der dem Fachmann bekannten Art und Weise, beispielsweise in einem sauerstoffhaltigen Plasma erfolgen. Die Parameter sind in der bekannten Weise so zu wählen, dass eine Oxidation und Schwarzfärbung der silberhaltigen Außenschicht erfolgt.

In einem weiteren Schritt erfolgen die Prüfung der schwarzgefärbten Außenschicht auf eine Anzahl von nicht schwarzgefärbten Fehlstellen und Erhalt eines ersten Wertes w.1; und/oder eine Größe von nicht schwarzgefärbte Fehlstellen und Erhalt eines zweiten Wertes w.2; und/oder eine Position von nicht schwarzgefärbte Fehlstellen und Erhalt eines dritten Wertes w.3. Nachfolgend werden die Werte w.1 mit sw.1 und/oder w.2 mit sw.2 und/oder w.3 mit sw.3 verglichen. Anschließend wird die plasmabehandelte erste Hohlkugel und die zweite Hohlkugel entfernt bzw. aussortiert falls w.1 größer sw.1 und/oder w.2 größer sw.2 und/oder w.3 größer sw.3 ist. Trifft keine der genannten Bedingungen zu, so weist die Außenschicht eine ausreichende Homogenität auf und das Verfahren wird wie nachstehend beschrieben fortgesetzt.

Die zweite Hohlkugel wird nach einer elektrischen Kontaktierung mit einer Polymerummantelung versehen. Die elektrische Kontaktierung der zweiten Hohlkugel kann dabei im Sinne der Erfindung auch vor dem Zusammensetzen der zweiten Hohlkugel aus den einzelnen Halbkugeln erfolgen. Nach den vorrangegangenen Schritten und ggf. weiteren optionalen Schritten wird ein Piezokeramisches Hydrophon erhalten.

Bevorzugt wir vor Auftragung der Polymerummantelung ein Haftvermittler auf der zweiten Hohlkugel aufgetragen.

Weiterhin wird vorteilhaft ein Verfahren zur kombinierten Testung und Herstellung eines Piezokeramischen Hydrophons mindestens umfassend die folgenden Schritte offenbart. In einem Basisschritt erfolgt die Bestimmung von einen Schwellenwert sw.1 aus einer vorab bestimmten maximale Anzahl von nicht schwarzgefärbten Fehlstellen und/oder einen Schwellenwert sw.2 einer Größe von nicht schwarzgefärbte Fehlstellen und/oder einen Schwellenwert sw.3 der Position von nicht schwarzgefärbte Fehlstellen. Im Sinne der Erfindung kann/können sowohl einer, zwei oder drei der Schwellenwerte sw.1, sw.2 und/oder sw.3 bestimmt werden. Der Ausdruck "Größe von nicht schwarzgefärbten Fehlstellen" umfasst bevorzugt im Sinne der Erfindung eine gemittelte, mittlere Größe, ausgedrückt als Fläche oder maximaler Durchmesser. Alternativ können mehrere Schwellenwerte sw.2 für jeweils alle im Schwellenwert sw.1 gezählten nicht schwarzgefärbten Fehlstellen umfasst sein. Bei der im weiteren Verfahren angewendeten Plasmabehandlung färbt sich eine silberhaltige Außenschicht schwarz. An Stellen in denen die Außenschicht nicht genug oder kein Silber enthält erfolgt keine oder nur geringe Schwarzfärbung. Dasselbe gilt für verschmutzte oder beschädigte Stellen der Außenschicht. Die Schwarzfärbung durch die Plasmabehandlung zeigt schwarzes oxidiertes Silber und damit eine homogene Oberfläche an. Fehlstellen bleiben bevorzugt in der ursprünglich silber-grauen Farbe und werden im Rahmen der Erfinder als nicht schwarzgefärbte Fehlstellen bezeichnet.

Die Auswahl der Schwellenwerte sw.1 und/oder sw.2 und/oder sw.3 erfolgt anhand von vorab definierten Zahlenwerten oder Bereichen auf der Außenschicht der Hohlkugel. Dabei ist auch beispielsweise ein Schwellenwert sw.1 gleich Null denkbar, d.h. es dürfen keine sichtbaren Fehlstellen erkennbar sein. Bevorzugt sind im Sinne der Erfindung nicht schwarzgefärbte Fehlstellen umfasst, die mit dem durchschnittlichen menschlichen Auge sichtbar sind. Im Rahmen der Erfindung sind aber auch optische Messmethoden, beispielsweise über Kameras und Sensoren im Bereich des sichtbaren, UV und Infraroten Lichtes sowie Laser mit umfasst. Alternativ kann die Anzahl, Größe und oder Position (sw.1, sw.2, sw.3) auch über elektromagnetische Methoden, beispielsweise über Oberflächenleitfähigkeiten bestimmt werden. Die Schwellenwerte zur Bestimmung der Anzahl der Fehlstellen, d.h. ab wann eine Stelle auf der plasmabehandelten Außenschicht als Fehlstelle gezählt wird, kann dabei in Abhängigkeit von den Anforderungen an das Hydrophon und anhand der Messgenauigkeit individuell bestimmt werden.

In einem ersten Verfahrensschritt wird eine Außenschicht umfassend Silber und optional Siliziumverbindungen auf einer ersten Kugelhalbschale aufgetragen und auf einer zweiten Kugelhalbschale aufgetragen. Der Ausdruck "Außenschicht" umfasst bevorzugt im Sinne der Erfindung eine zu mindestens teilweise Beschichtung der Kugelhalbschalenflächen. Der Ausdruck "teilweise" umfasst im Sinne der Erfindung eine Beschichtung bevorzugt von mindestens 30 %, besonders bevorzugt mindestens 75 % der nach Kugelhalbschalen(-ober-)flächen. Zur Vermeidung eines Kurzschlusses können einzelne Abschnitte Kugelhalbschalenflächen der ersten Kugelhalbschale und der zweiten Kugelhalbschale ohne Außenschicht (Beschichtung) ausgeführt sein oder mit einer dazwischen angeordneten Isolierschicht oder einem isolierenden Element ausgeführt sein. Dies umfasst beispielsweise bevorzugt die Verbindungsfläche der beiden Kugelhalbschalen zueinander. Der Ausdruck "Außenschicht" umfasst im Sinne der Erfindung bevorzugt eine Beschichtung auf der Oberfläche der Kugelhalbschale, besonders bevorzugt die inneren und äußeren Schalenoberflächen der jeweiligen Kugelhalbschale. Die Außenschicht weist Silber und/oder Siliziumverbindungen auf, bzw. gleichbedeutend mit "enthält" Silber und/oder Siliziumverbindungen. Das Auftragen kann beispielsweise über ein Auftragen mittels Pinsel, Sprühverfahren, Tauchverfahren oder auch über PVD (physical-vapor-deposition) oder CVD (chemical-vapor-depostion) erfolgen.

In einem folgenden Schritt wird die Außenschicht gesintert und/oder kalziniert und eine erste beschichtete Kugelhalbschale und eine zweite beschichtete Kugelhalbschale erhalten.

Anschließend wird die erste beschichtete Kugelhalbschale mit der zweiten beschichteten Kugelhalbschale zu einer Hohlkugel zusammengefügt.

In einem nächsten Schritt erfolgen die Plasmabehandlung der Außenschicht und das Erhalten einer plasmabehandelten Hohlkugel mit einer schwarzgefärbten Außenschicht. Die Plasmabehandlung kann in der dem Fachmann bekannten Art und Weise, beispielsweise in einem sauerstoffhaltigen Plasma erfolgen. Die Parameter sind in der bekannten Weise so zu wählen, dass eine Oxidation und Schwarzfärbung der silberhaltigen Außenschicht erfolgt.

In einem weiteren Schritt erfolgen die Prüfung der schwarzgefärbten Außenschicht auf eine Anzahl von nicht schwarzgefärbten Fehlstellen und Erhalt eines ersten Wertes w.1; und/oder eine Größe von nicht schwarzgefärbte Fehlstellen und Erhalt eines zweiten Wertes w.2; und/oder eine Position von nicht schwarzgefärbte Fehlstellen und Erhalt eines dritten Wertes w.3. Nachfolgend werden die Werte w.1 mit sw.1 und/oder w.2 mit sw.2 und/oder w.3 mit sw.3 verglichen. Anschließend wird die plasmabehandelte Hohlkugel entfernt bzw. aussortiert falls w.1 größer sw.1 und/oder w.2 größer sw.2 und/oder w.3 größer sw.3 ist. Trifft keine der genannten Bedingungen zu, so weist die Außenschicht eine ausreichende Homogenität auf, und die plasmabehandelte Hohlkugel kann beispielsweise nach einer, wie nachstehend beschriebener, anschließender reduktiven Reinigungsbehandlung wieder in einem Hydrophon verbaut werden. Der Ausdruck "reduktiven Reinigungsbehandlung" umfasst im Sinne der Erfindung eine Behandlung mit einem chemisch reduzierend wirkenden Agens (Reduktionsmittel), beispielsweise einer Lösung/Suspension oder reduzierenden Plasma.

Anschließend erfolgt nach einer elektrischen Kontaktierung eine Polymerummantelung der Hohlkugel.

Bevorzugt erfolgt die Reinigungsbehandlung der schwarzgefärbten Außenschicht in Form einer Plasmabehandlung mit 90 vol. % bis 98 vol. % Ar/H₂ und 10 vol. % bis 2 vol. % O₂ bevorzugt 95 vol. % bis 97 vol. % Ar/H₂ mit 3 vol. % bis 5 vol. % O₂.

In einer weiteren Ausgestaltung erfolgt die Reinigungsbehandlung in die Reinigungsbehandlung der schwarzgefärbten Außenschicht in Schritt g.) in Form ein mechanisches Reinigungsverfahren mit z.B. Strahlen mit Korund oder schaben mit einem Glaspinsel.

Bevorzugt wird vor der Polymerummantelung ein Haftvermittler auf der ersten gereinigten beschichteten Hohlkugel aufgetragen.

Die Erfindung umfasst des Weiteren ein Piezokeramisches Hydrophon erhältlich nach dem erfindungsgemäßen Verfahren.

Des Weiteren wird die Erfindung anhand der folgenden Figur näher erläutert. Die Figur beschränkt dabei nicht den Schutzumfang der Erfindung, sondern dient nur der beispielhaften Erläuterung. Die Figur ist nicht maßstabsgetreu.

Es zeigen:
Figur 1 ein schematischer Querschnitt eines über das erfindungsgemäße Verfahren erhältliche piezokeramische Hydrophon,
Figur 2 eine schematische plane Draufsicht auf die Außenschicht und
Figur 3 eine schematische plane Draufsicht auf die schwarzgefärbte Außenschicht.

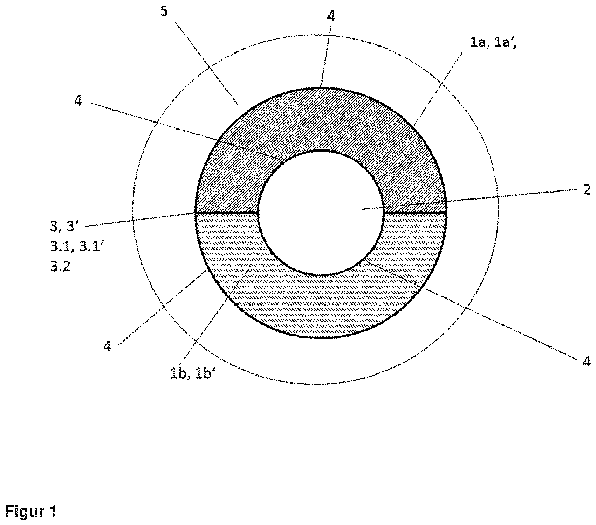

Figur 1 zeigt ein schematischer Querschnitt eines über das erfindungsgemäße Verfahren erhältliche piezokeramische Hydrophon. Eine erste Kugelhalbschale (1a) und eine zweite Kugelhalbschale (1b) umfassend ein radial polarisiertes, piezoelektrisches Material (beispielsweise Blei-Zirkonat-Titanat (PZT)) sind zu einer Hohlkugel (3) mit Hohlkugelvolumen (2) zusammengesetzt., Die erste Kugelhalbschale (1a) und die zweite Kugelhalbschale (1b) weisen eine Außenschicht (4) auf. Die Außenschicht (4) weist (enthält) Silber und/oder Siliziumverbindungen auf. Zur Vermeidung eines Kurzschlusses können einzelne Abschnitte der Kugelhalbschalenflächen der ersten Kugelhalbschale (1) und der zweiten Kugelhalbschale (2) ohne Außenschicht (4) ausgeführt sein. Eine Polymerummantelung (5) umschließt die Hohlkugel (3) und verhindert bzw. verlangsamt das Eindringen von Feuchtigkeit oder Schmutz.

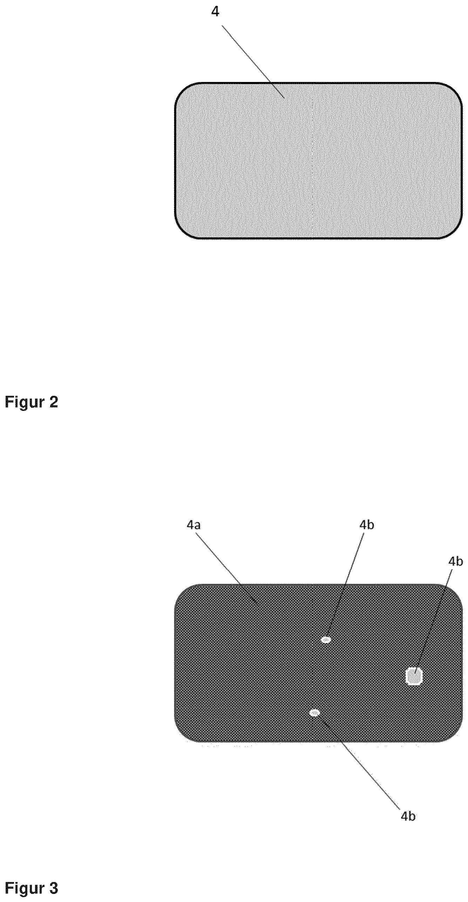

Figur 2 zeigt eine schematische plane Draufsicht auf die Außenschicht (4). Die Außenschicht (4) ist silbrig-grau gefärbt. Eventuelle Fehlstellen oder Verunreinigungen sind in der Regel mit dem bloßen Auge nicht erkennbar.

Figur 3 zeigt eine schematische plane Draufsicht auf die schwarzgefärbte Außenschicht (4a) nach der Plasmabehandlung in Schritt c) des erfindungsgemäßen Verfahrens. Fehlstellen und Verunreinigung sind als graue Stellen, als nicht schwarzgefärbten Fehlstellen (4b) deutlich zu erkennen. An diesen nicht schwarzgefärbten Fehlstellen (4b) ist keine Silberschicht vorhanden, welche sich in der Plasmabehandlung schwarz färben würde und eine Silberoxidschicht bildet.

### Bezugszeichenliste:

- (1a): erste Kugelhalbschale
- (1a'): erste beschichtete Kugelhalbschale
- (1b): zweite Kugelhalbschale
- (1b'): zweiten beschichtete Kugelhalbschale
- (2): Hohlkugelvolumen
- (3): Hohlkugel
- (3'): plasmabehandelte Hohlkugel
- (3.1): erste Hohlkugel
- (3.1'): plasmabehandelte erste Hohlkugel
- (3.2): zweite Hohlkugel
- (4): Außenschicht
- (4a): schwarzgefärbte Außenschicht
- (4b): nicht schwarzgefärbten Fehlstellen
- (5): Polymerummantelung

## Patentansprüche

1. Verfahren zur Testung einer Hohlkugel für die Herstellung eines piezokeramischen Hydrophons mindestens umfassend:
- die Bestimmung von einen Schwellenwert sw.1 aus einer vorab bestimmten maximale Anzahl von nicht schwarzgefärbten Fehlstellen (4b) und/oder einen Schwellenwert sw.2 einer Größe von nicht schwarzgefärbte Fehlstellen (4b) und/oder einen Schwellenwert sw.3 der Position von nicht schwarzgefärbte Fehlstellen (4b);
a.) Auftragen einer Außenschicht (4) umfassend Silber und optional Siliziumverbindungen auf einer ersten Kugelhalbschale (1a) und einer zweiten Kugelhalbschale (1b);
b.) Sintern und/oder Kalzinieren der Außenschicht (4) und erhalten einer ersten beschichteten Kugelhalbschale (1a') und einer zweiten beschichteten Kugelhalbschale (1b');
c.) Zusammenfügen der ersten beschichteten Kugelhalbschale (1a') mit der zweiten beschichteten Kugelhalbschale (1b') zu einer Hohlkugel (3);
**gekennzeichnet durch**:
d.) Plasmabehandlung der Außenschicht (4) und erhalten einer plasmabehandelten Hohlkugel (3') mit einer schwarzgefärbten Außenschicht (4a);
e.) Prüfung der schwarzgefärbten Außenschicht (4a) auf:
- eine Anzahl von nicht schwarzgefärbten Fehlstellen (4b) und Erhalt eines ersten Wertes w.1; und/oder
- eine Größe von nicht schwarzgefärbte Fehlstellen (4b) und Erhalt eines zweiten Wertes w.2; und/oder
- eine Position von nicht schwarzgefärbte Fehlstellen (4b) und Erhalt eines dritten Wertes w.3
f.) Vergleich der Werte w.1 mit sw.1 und/oder w.2 mit sw.2 und/oder w.3 mit sw.3;
g.) Entfernen der plasmabehandelten Hohlkugel (3') falls w.1 größer sw.1 und/oder w.2 größer sw.2 und/oder w.3 größer sw.3 ist.

2. Verfahren nach Anspruch 1, **dadurch gekennzeichnet, dass** die Plasmabehandlung bei einem Sauerstoffanteil von 80 vol. % bis 100 vol. % erfolgt.

3. Verfahren nach Anspruch 1 oder 2, **dadurch gekennzeichnet, dass** die die Plasmabehandlung bei einem Inertgas Anteil von 1 bis 20 vol. % erfolgt.

4. Verfahren nach Anspruch 3, **dadurch gekennzeichnet, dass** der Inertgas Anteil die Elemente oder Verbindungen N₂, Xe, He, Ar, CO₂ und/oder Gemische davon enthält.

5. Verfahren nach einem der Ansprüche 1 bis 4, **dadurch gekennzeichnet, dass** die Prüfung in Schritt e.) über einen Grenzmusterkatalog erfolgt.

6. Verfahren nach einem der Ansprüche 1 bis 5, **dadurch gekennzeichnet, dass** die Hohlkugel (3) vor der Plasmabehandlung der Außenschicht (4) mechanisch und/oder nasschemisch gereinigt wird,

7. Verfahren nach Anspruch 6, **dadurch gekennzeichnet, dass** die mechanische Reinigung mit Korundstrahlen erfolgt.

8. Verfahren gemäß einem der vorherigen Ansprüche, **dadurch gekennzeichnet, dass** zur Chargentestung von piezokeramischen Hydrophonen ergänzend mindestens die folgenden Schritte durchgeführt werden:
- Wiederhohlen der Schritte a) bis c) aus Anspruch 1 mindestens einmal und Erhalt von mindestens einer zweiten Hohlkugel (3.2)
h.) Entfernen der zweiten Hohlkugel (3.2) falls w.1 größer sw.1 und/oder w.2 größer sw.2 und/oder w.3 größer sw.3 ist;
i.) Auftragung einer Polymerummantelung (5) und vorangehende elektrische Kontaktierung auf der zweiten Hohlkugel (3.2) falls die erste Hohlkugel (3.1') in Schritt h) nicht entfernt wurde.

9. Verfahren nach Anspruch 8, **dadurch gekennzeichnet, dass** vor Auftragung der Polymerummantelung (5) in Schritt i.) ein Haftvermittler auf der zweiten Hohlkugel (3.2) aufgetragen wird.

10. Verfahren gemäß einem der vorherigen Ansprüche, **dadurch gekennzeichnet, dass** zur kombinierten Testung und Herstellung eines Piezokeramischen Hydrophons ergänzend mindestens die folgenden Schritte ausgeführt werden:
h.) falls die plasmabehandelte Hohlkugel (3') in Schritt g.) aus Anspruch 1 nicht entfernt wurde erfolgt eine Reinigungsbehandlung der schwarzgefärbten Außenschicht (4a) auf der plasmabehandelten Hohlkugel (3') und Erhalt einer ersten gereinigten beschichteten Hohlkugel (3"); andernfalls erfolgt ein Beenden des Verfahrens;
i.) eine Polymerummantelung (5) und vorangehende elektrische Kontaktierung der Hohlkugel (3) erfolgt.

11. Verfahren nach Anspruch 10, **dadurch gekennzeichnet, dass** die Reinigungsbehandlung der schwarzgefärbten Außenschicht (4a) in Schritt h.) in Form einer Plasmabehandlung mit 90 vol. % bis 98 vol. % Ar/H₂ und 10 vol. % bis 2 vol. % O₂ bevorzugt 95 vol. % bis 97 vol. % Ar/H₂ mit 3 vol. % bis 5 vol. % O₂ erfolgt.

12. Verfahren nach Anspruch 10 oder 11, **dadurch gekennzeichnet, dass** die Reinigungsbehandlung der schwarzgefärbten Außenschicht (4a) in Schritt h.) in Form eines mechanischen Reinigungsverfahrens mit z.B. Strahlen mit Korund oder schaben mit einem Glaspinsel ausgeführt wird.

13. Verfahren nach einem der Ansprüche 10 bis 12, **dadurch gekennzeichnet, dass** vor der Polymerummantelung ein Haftvermittler auf der ersten gereinigten beschichteten Hohlkugel (3") aufgetragen wird.

14. Piezokeramisches Hydrophon erhältlich nach einem Verfahren gemäß einem der Ansprüche 10 bis 13.

## Claims

1. A method for testing a hollow sphere for the production of a piezoceramic hydrophone at least including:
- the determination of a threshold value sw.1 from a predetermined maximum number of non-black-colored defects (4b) and/or a threshold value sw.2 of a size of non-black-colored defects (4b) and/or a threshold value sw.3 of the position of non-black-colored defects (4b);
a.) applying an outer layer (4) comprising silver and optionally silicon compounds on a first hemispherical shell (1a) and a second hemispherical shell (1b);
b.) sintering and/or calcining the outer layer (4) and obtaining a first coated hemispherical shell (1a') and a second coated hemispherical shell (1b');
c.) combining the first coated hemispherical shell (1a') with the second coated hemispherical shell (1b') to form a hollow sphere (3);
**characterized by**:
d.) plasma treatment of the outer layer (4) and obtaining a plasma-treated hollow sphere (3') with a black-colored outer layer (4a);
e.) testing the black-colored outer layer (4a) for:
- a number of non-black-colored defects (4b) and obtaining a first value w.1; and/or
- a size of non-black-colored defects (4b) and obtaining a second value w.2; and/or
- a position of non-black defects (4b) and obtaining a third value w.3
f.) comparing values w.1 with sw.1 and/or w.2 with sw.2 and/or w.3 with sw.3;
g.) removing the plasma-treated hollow sphere (3') if w.1 is greater than sw.1 and/or w.2 is greater than sw.2 and/or w.3 is greater than sw.3.

2. The method as claimed in claim 1, **characterized in that** the plasma treatment takes place with an oxygen content of 80 vol. % to 100 vol. %.

3. The method as claimed in claim 1 or 2, **characterized in that** the plasma treatment takes place with an inert gas proportion of 1 to 20 vol. %.

4. The method as claimed in claim 3, **characterized in that** the inert gas portion contains the elements or compounds N₂, Xe, He, Ar, CO₂ and/or mixtures thereof.

5. The method as claimed in any one of claims 1 to 4, **characterized in that** the testing in step e.) is carried out by means of a boundary sample catalogue.

6. The method as claimed in any one of claims 1 to 5, **characterized in that** before the plasma treatment of the outer layer (4) the hollow sphere (3) is mechanically and/or wet chemically cleaned.

7. The method as claimed in claim 6, **characterized in that** the mechanical cleaning is carried out with corundum blasting.

8. The method as claimed in any of the preceding claims, **characterized in that** for batch testing of piezoceramic hydrophones at least the following steps are additionally performed:
- repeating steps a.) to c.) from claim 1 at least once and obtaining at least one second hollow sphere (3.2)
h.) removing the second hollow sphere (3.2) if w.1 is greater than sw.1 and/or w.2 is greater than sw.2 and/or w.3 is greater than sw.3;
i.) applying a polymer sheath (5) and preceding electrical contacting to the second hollow sphere (3.2) if the first hollow sphere (3.1') has not been removed in step h.

9. The method as claimed in claim 8, **characterized in that** before application of the polymer sheath (5) in step i.) an adhesion promoter is applied to the second hollow sphere (3.2).

10. The method as claimed in any of the preceding claims, **characterized in that** for a combined testing and manufacture of a piezoceramic hydrophone at least the following steps are additionally performed:
h.) if the plasma-treated hollow sphere (3') is not removed in step g.) from claim 1 a cleaning treatment of the black-colored outer layer (4a) on the plasma-treated hollow sphere (3') and obtaining a first cleaned coated hollow sphere (3") are carried out, otherwise the method will be terminated;
i.) polymer sheathing (5) and preceding electrical contacting of the hollow sphere (3) are carried out.

11. The method as claimed in claim 10, **characterized in that** the cleaning treatment of the black-colored outer layer (4a) in step h.) is carried out in the form of a plasma treatment with 90 vol. % to 98 vol. % Ar/H₂ and 10 vol. % to 2 vol. % O₂, preferably 95 vol. % to 97 vol. % Ar/H₂ with 3 vol. % to 5 vol. % O₂.

12. The method as claimed in claim 10 or 11, **characterized in that** the cleaning treatment of the black-colored outer layer (4a) in step h.) is performed in the form of a mechanical cleaning method with for example blasting with corundum or scraping with a glass brush.

13. The method as claimed in any one of claims 10 to 12, **characterized in that** before the polymer sheath an adhesion promoter is applied on the first cleaned coated hollow sphere (3").

14. A piezoceramic hydrophone obtainable by a method as claimed in any one of claims 10 to 13.

## Revendications

1. Procédé de test d'une sphère creuse pour la fabrication d'un hydrophone piézocéramique, comprenant au moins :
- la détermination d'une valeur de seuil sw.1 à partir d'un nombre maximal déterminé préalablement de points de défaut (4b) non colorés en noir et/ou d'une valeur de seuil sw.2 d'une grandeur de points de défaut (4b) non colorés en noir et/ou d'une valeur de seuil sw.3 de la position de points de défaut (4b) non colorés en noir ;
a) application d'une couche externe (4) comprenant de l'argent et, en option, des combinaisons de silicium, sur une première demi-coque de sphère (1a) et une deuxième demi-coque de sphère (1b) ;
b) frittage et/ou calcination de la couche externe (4) et obtention d'une première demi-coque de sphère revêtue (1a') et d'une deuxième demi-coque de sphère revêtue (1b') ;
c) assemblage de la première demi-coque de sphère revêtue (1a') avec la deuxième demi-coque de sphère revêtue (1b') en une sphère creuse (3) ;
**caractérisé par** :
d) traitement au plasma de la couche externe (4) et obtention d'une sphère creuse traitée au plasma (3') avec une couche externe noire (4a) ;
e) vérification de la couche externe noire (4a), en vue de déceler :
- un certain nombre de points de défaut (4b) non colorés en noir et obtention d'une première valeur w.1 ; et/ou
- une grandeur de points de défaut (4b) non colorés en noir et obtention d'une deuxième valeur w.2 ; et/ou
- une position de points de défaut (4b) non colorés en noir et obtention d'une troisième valeur w.3 ;
f) comparaison des valeurs w.1 avec sw.1 et/ou w.2 avec sw.2 et/ou w.3 avec sw.3 ;
g) élimination de la sphère creuse traitée au plasma (3') si w.1 est supérieure à sw.1 et/ou w.2 est supérieure à sw.2 et/ou w.3 est supérieure à sw.3.

2. Procédé selon la revendication 1, **caractérisé en ce que** le traitement au plasma s'effectue avec une proportion d'oxygène de 80 % volumiques à 100 % volumiques.

3. Procédé selon la revendication 1 ou 2, **caractérisé en ce que** le traitement au plasma s'effectue avec une proportion de gaz inerte de 1 à 20 % volumiques.

4. Procédé selon la revendication 3, **caractérisé en ce que** la proportion de gaz inerte contient les éléments ou les combinaisons N₂, Xe, Ne, Ar, CO₂ et/ou des mélanges de ceux-ci.

5. Procédé selon l'une des revendications 1 à 4, **caractérisé en ce que** la vérification à l'étape e) s'effectue par le biais d'un catalogue de modèles de limite.

6. Procédé selon l'une des revendications 1 à 5, **caractérisé en ce que** la sphère creuse (3) est nettoyée mécaniquement et/ou par voie chimique humide avant le traitement au plasma de la couche externe (4).

7. Procédé selon la revendication 6, **caractérisé en ce que** le nettoyage mécanique s'effectue par corindonnage.

8. Procédé selon l'une des revendications précédentes, **caractérisé en ce qu'**en vue du test par lots d'hydrophones piézocéramiques, au moins les étapes suivantes sont exécutées en complément :
- répétition des étapes a) à c) de la revendication 1 au moins une fois et obtention d'au moins une deuxième sphère creuse (3.2)
h) élimination de la deuxième sphère creuse (3.2) si w.1 est supérieure à sw.1 et/ou w.2 est supérieure à sw.2 et/ou w.3 est supérieure à sw.3 ;
i) application d'un enrobage en polymère (5) et mise en contact électrique préalable sur la deuxième sphère creuse (3.2) dans le cas où la première sphère creuse (3.1') n'a pas été éliminée à l'étape h).

9. Procédé selon la revendication 8, **caractérisé en ce qu'**un agent adhésif est appliqué sur la deuxième sphère creuse (3.2) avant l'enrobage de polymère (5) à l'étape i) .

10. Procédé selon l'une des revendications précédentes, **caractérisé en ce qu'**en vue du test combiné et de la fabrication d'un hydrophone piézocéramique, au moins les étapes suivantes sont exécutées en complément :
h) dans le cas où la sphère creuse traitée au plasma (3') n'a pas été éliminée à l'étape g) de la revendication 1, réalisation d'un traitement de nettoyage de la couche externe colorée en noir (4a) sur la sphère creuse traitée au plasma (3') et obtention d'une première sphère creuse revêtue nettoyée (3") ; le cas contraire terminaison du procédé ;
i) réalisation d'un enrobage en polymère (5) et mise en contact électrique préalable de la sphère creuse (3).

11. Procédé selon la revendication 10, **caractérisé en ce que** le traitement de nettoyage de la couche externe colorée en noir (4a) à l'étape h) est effectué sous la forme d'un traitement au plasma avec 90 % volumiques à 98 % volumiques d'Ar/H₂ et 10 % volumiques à 2 % volumiques d'O₂, de préférence de 95 % volumiques à 97 % volumiques d'Ar/H₂ et 3 % volumiques à 5 % volumiques d'O₂.

12. Procédé selon la revendication 10 ou 11, **caractérisé en ce que** le traitement de nettoyage de la couche externe colorée en noir (4a) à l'étape h) est effectué sous la forme d'un procédé de nettoyage mécanique, par exemple par un grenaillage avec du corindon ou un grattage avec un pinceau de fibres de verre.

13. Procédé selon l'une des revendications 10 à 12, **caractérisé en ce qu'**un agent adhésif est appliqué sur la première sphère creuse revêtue nettoyée (3") avant l'enrobage de polymère.

14. Hydrophone piézocéramique pouvant être obtenu conformément à un procédé selon l'une des revendications 10 à 13.
